# EUROPÄISCHE PATENTSCHRIFT

(11) **EP 1 409 376 B1**
(45) Veröffentlichungstag und Bekanntmachung des Hinweises auf die Patenterteilung: **28.03.2007**
(21) Anmeldenummer: 02790185.9
(22) Anmeldetag: 23.07.2002
(51) Int. Cl.: B65G 1/137

(54) **VERFAHREN UND VORRICHTUNG FÜR DIE RECHNERGESTEUERTE EIN- UND AUSLAGERUNG VON KLEINTEILIGEN PRODUKTEN**
METHOD AND DEVICE FOR CONDUCTING THE COMPUTER-CONTROLLED STORAGE AND REMOVAL OF SMALL-PIECE PRODUCTS
PROCEDE ET DISPOSITIF PERMETTANT LE STOCKAGE ET LE DESTOCKAGE, COMMANDES PAR ORDINATEUR, DE PRODUITS EN PETITES PIECES

(30) Priorität: 26.07.2001 DE 10136090
(43) Veröffentlichungstag der Anmeldung: 21.04.2004
(73) Patentinhaber: Beils, Dirk Rolf, 56727 Mayen (DE); Jansen, Peter, 45657 Recklinghausen (DE); Wallat, Holger Thomas, 58455 Witten (DE); Riedl, Markus Erich, 45525 Hattingen (DE)
(72) Erfinder: Beils, Dirk Rolf, 56727 Mayen (DE); Jansen, Peter, 45657 Recklinghausen (DE); Wallat, Holger Thomas, 58455 Witten (DE); Riedl, Markus Erich, 45525 Hattingen (DE)
(74) Vertreter: Behrendt, Arne
(86) Internationale Anmeldenummer: PCT/EP2002/008182
(87) Internationale Veröffentlichungsnummer: WO 2003/010073

(56) Entgegenhaltungen:
- US-A- 5 669 748
- US-A- 6 061 607
- CHRIST ET AL: "Neue Ideen zum automatischen Kommissionieren" FORDERN UND HEBEN, KRAUSSKOPF VERLAG FUR WIRTSCHAFT. MAINZ, DE, Bd. 35, Nr. 12, 1. Dezember 1985 (1985-12-01), Seiten 910-911, XP002096847 ISSN: 0341-2636

## Beschreibung

Die Erfindung betrifft ein Verfahren und eine Vorrichtung für die rechnergesteuerte Ein- und Auslagerung von kleinteiligen, verpackten Produkten, insbesondere von Apothekenprodukten, unter Verwendung eines rechnergesteuerten Lagersystemes, mindestens eines Regals mit einer Vielzahl von über- und nebeneinander angeordneten Regalfächern und einer vor dem Regalfach verfahrbaren, rechnergesteuerten Handhabungsvorrichtung für die Handhabung der Produkte, insbesondere bei der Ein-, Aus- und Umlagerung, bei welchem die Produkte bei der Einlagerung rechnergesteuert identifiziert und anschließend mittels der Handhabungsvorrichtung rechnergesteuert in einem Regalfach abgelegt werden und bei der Auslagerung auf Anforderung mittels der rechnergesteuerten Handhabungsvorrichtung wieder aus diesem Regalfach entnommen werden (siehe z.B. das Dokument US-A-6 061 607).

Verfahren und Vorrichtungen der angegebenen Art sind seit geraumer Zeit in verschiedenen Ausführungsformen bekannt. Sie eignen sich insbesondere für die rechnergesteuerte Lagerhaltung und Kommissionierung der Produkte einer Apotheke.

Schwierigkeiten bei den bekannten Verfahren entstehen dadurch, daß die Handhabungsvorrichtung bei der Auslagerung und Kommissionierung verhältnismäßig große Wege zurücklegen muß und dementsprechend viel Zeit benötigt. Das ist in der Apotheke insbesondere bei Produkten mit höherer Verkaufsfrequenz (sogenannte Schnelldreher oder Mitteldreher) besonders nachteilig. Hier ergeben sich oft unzumutbare Wartezeiten.

Es ist deshalb in der Apotheke üblich, für die sogenannten Schnelldreher gesonderte Regale und/oder Schubläden vorzusehen, die von Hand be- und entladen werden oder mit gesonderten Entnahmevorrichtungen versehen sind und dementsprechend nicht in das rechnergesteuerte Gesamtsystem einbezogen sind. Dementsprechend entstehen Schwierigkeiten bei der Einbindung der sogenannten Schnelldreher in das Gesamtkonzept.

Es ist deshalb Aufgabe der Erfindung, ein Verfahren und eine Vorrichtung zu schaffen, welche insbesondere bei der Kommissionierung von Produkten mit höherer Verkaufsfrequenz wesentlich schneller arbeiten und in das Gesamtsystem der rechnergesteuerten Lagerhaltung und Kommissionierung einbezogen sind.

Zur Lösung dieser Aufgabe schlägt die Erfindung ausgehend vom Verfahren der eingangs genannten Art vor, daß mit Hilfe einer zusätzlichen rechnergesteuerten Auslagerungsvorrichtung von der gegenüberliegenden Regalseite her und zeitgleich mit den Arbeitsvorgängen der Handhabungsvorrichtung Produkte mit höherer Verkaufsfrequenz aus den Regalfächern entnommen werden.

Diese zusätzliche Auslagerungsvorrichtung kann gleichzeitig mit der für die sonstige Ein- und Auslagerung dienenden Handhabungsvorrichtung arbeiten und dementsprechend Produkte mit höherer Verkaufsfrequenz schnell dem System entnehmen, ohne die sonstigen Funktionen, insbesondere die Einlagerung zu stören. Die zusätzlichen Auslagerungsvorrichtungen werden zweckmäßiger weise natürlich nur dort vorgesehen, wo die Produkte mit höherer Verkaufsfrequenz (Schnelldreher oder Mitteldreher) eingelagert sind. Dadurch, daß die zusätzliche rechnergesteuerte Auslagerungsvorrichtung in das gesamte rechnergesteuerte System einbezogen ist, werden auch diese Produkte zuverlässig von dem Gesamtsystem erfaßt und nachgehalten. Die Einlagerung dieser Produkte mit hoher Verkaufsfrequenz geschieht nach wie vor durch die Handhabungsvorrichtung, die zugleich der Ein- und Auslagerung dient. Die Einlagerung kann ohne weiteres in verkaufsarmen Zeiten oder des Nachts vorgenommen werden, so dass in dem Regal stets ein ausreichender Vorrat an Produkten höherer Verkaufsfrequenz rechnergesteuert bereitgehalten werden kann und mittels der zusätzlichen Auslagerungsvorrichtung schnell entnommen werden kann.

Die zusätzlichen Auslagerungsvorrichtungen sind aus Kostengründen zweckmäßig nur in Teilbereichen des Regals angeordnet, nämlich nur dort, wo die Schnell- und/oder Mitteldreher entnommen werden sollen.

Zweckmäßig ist das gesamte Regal aus einer Vielzahl von Regalmodulen zusammengesetzt, wobei die zusätzlichen Auslagerungsvorrichtungen nur einzelnen Regalmodulen zugeordnet sind. Dieser modulare Aufbau des Regales macht es möglich, das Gesamtsystem den vorhandenen Räumlichkeiten optimal anzupassen und im Bedarfsfall auch zu variieren.

Schließlich ist vorgesehen, daß das Regal vor der zusätzlichen Auslagerungsvorrichtung mit einer Vielzahl von Lagerungsschächten für die Aufnahme von untereinander gleichartigen Produkten versehen ist. In diesen Lagerungsschächten können jeweils mehrere Packungen der jeweiligen Schnelldreher oder Mitteldreher bereitgehalten werden, so daß deren Entnahme durch eine ausreichende Pufferung von dem Einlagerungsvorgang entkoppelt ist.

Ein Ausführungsbeispiel der Erfindung wird im folgenden anhand der Zeichnungen näher erläutert. Es zeigen:

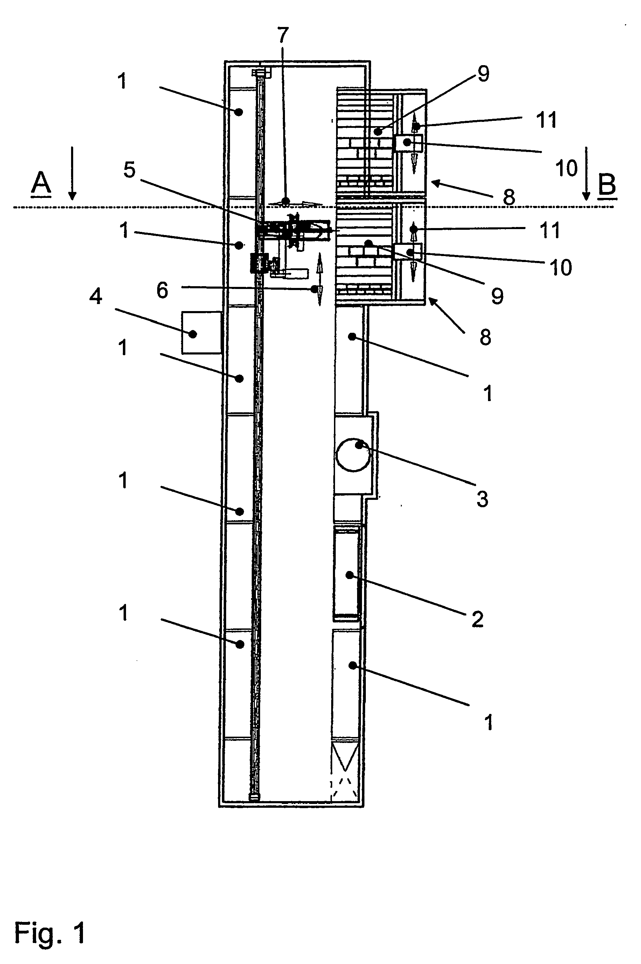

- Figur 1: schematisch eine Draufsicht auf eine Vorrichtung gemäß der Erfindung;

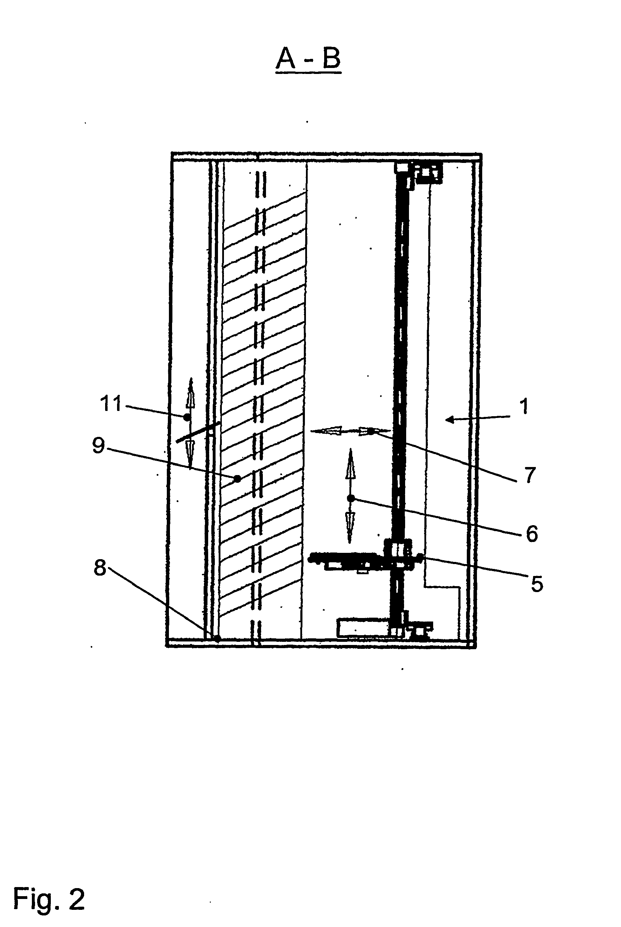

- Figur 2: einen Schnitt entlang der Linie A-B in Figur 1.

In den Zeichnungen sind die normalen, in zwei gegenüberliegenden Regalreihen aufgestellten Regalmodule für die Langsamdreher mit dem Bezugszeichen 1 bezeichnet. In einer der Reihen sind zusätzlich ein Einlagerungsmodul 2, ein Identifizierungsmodul 3 und ein Ausgabemodul 4 eingegliedert. Zwischen beiden Regalreihen ist eine Handhabungsvorrichtung 5 angeordnet, die in Richtung der Pfeile 6 zwischen den Regalreihen verfahrbar ist und die verpackten Produkte in Richtung der Pfeile 7 bewegen kann.

Weiterhin sind in einige der Regalreihen zwei Regalmodule 8 für Schnelldreher und/oder Mitteldreher eingegliedert, die mit geneigten Lagerschächten 9 für die Aufnahme von mehreren, untereinander gleichartigen Produkten versehen sind.

Im Bereich der Regalmodule 8 sind der Handhabungsvorrichtung 5 gegenüberliegend zwei zusätzliche Auslagerungsvorrichtungen 10 vorgesehen, die entlang der Pfeile 11 verfahrbar sind und zur schnellen Entnahme von Schnelldrehern und Mitteldrehem aus den Regalmodulen 8 dienen.

### Die Vorrichtung funktioniert wie folgt:

Zunächst werden die verpackten Produkte von Hand in das Einlagerungsmodul 2 eingelegt. Aus diesem Einlagerungsmodul 2 entnimmt die Handhabungsvorrichtung 5 die verpackten Produkte und führt sie dem ldentifizierungsmodul 3 zu. Nach der Identifizierung ergreift die Handhabungsvorrichtung 5 die verpackten Produkte erneut und legt sie in einem der Regalmodule 1 oder 8 ab.

Zur Entnahme der Langsamdreher aus den Regalmodulen 1 verfährt die Handhabungsvorrichtung 5 wieder an den Regalplatz, in dem das nachgefragte verpackte Produkt liegt, entnimmt das Produkt diesem Regalfach, transportiert es zum Ausgabemodul 4 und legt es dort ab. Die Schnelldreher können demgegenüber unabhängig von der Handhabungsvorrichtung 5 mittels der Auslagerungsvorrichtungen 10 den Regalmodulen entnommen werden. Da die Auslagerung aus den Regalmodulen 8 für Schnell- und Mitteldreher seitlich von der Arbeit der Handhabungsvorrichtung 5 entkoppelt ist, können die Schnell- und Mitteldreher dem System wesentlich schneller entnommen werden, als bisher. Die Einlagerung der Schnell- und Mitteldreher erfolgt indessen weiterhin mittels der Handhabungsvorrichtung 5 zu verkehrsarmen Zeiten oder des Nachts.

## Patentansprüche

1. Verfahren für die rechnergesteuerte Ein- und Auslagerung von kleinteiligen, verpackten Produkten, insbesondere Apothekenprodukten, unter Verwendung eines rechnergesteuerten Lagersystems, mindestens eines Regales mit einer Vielzahl von über- und nebeneinander angeordneten Regalfächern und einer vor dem Regal an einer ersten Regalseite verfahrbaren, rechnergesteuerten Handhabungsvorrichtung (5) für die Handhabung der Produkte, insbesondere bei der Ein-, Aus- und Umlagerung, wobei die Produkte, insbesondere bei der Einlagerung, rechnergesteuert identifiziert und anschließend mittels der Handhabungsvorrichtung (5) rechnergesteuert in einem Regalfach abgelegt werden und bei der Auslagerung auf Anforderung mittels der rechnergesteuerten Handhabungsvorrichtung (5) wieder aus diesem Regalfach entnommen werden,
**dadurch gekennzeichnet,**
**daß** mit Hilfe einer zusätzlichen rechnergesteuerten, ausschließlich der Auslagerung dienenden Auslagerungsvorrichtung (10), welche nur einem Teilbereich des gesamten Regales zugeordnet ist, von einer der ersten Regalseite gegenüberliegenden, zweiten Regalseite des selben Regales her und zeitgleich mit den Arbeitsvorgängen der Handhabungsvorrichtung (5) Produkte mit höherer Verkaufsfrequenz aus den Regalfächern innerhalb des Teilbereiches entnommen werden, wobei in diesen Regalfächern jeweils ausschließlich untereinander gleichartige Produkte gelagert werden.

2. Vorrichtung zur Durchführung des Verfahrens gemäß Patentanspruch 1, mit einem rechnergesteuerten Lagersystem, einer rechnergesteuerten Identifikationseinrichtung (3) für die Identifizierung der einzulagernden Produkte, mindestens einem Regal, welches eine Vielzahl von über- und nebeneinander angeordneten Regalfächern aufweist, und einer vor einer ersten Regalseite verfahrbaren, rechnergesteuerten Handhabungsvorrichtung (5) für die Handhabung der Produkte bei der Einlagerung und der Auslagerung,
**gekennzeichnet durch**
mindestens eine an einer der ersten Regalseite gegenüberliegenden, zweiten Regalseite des selben Regales angeordnete, zusätzliche rechnergesteuerte Auslagerungsvorrichtung (10), die ausschließlich der Auslagerung von Produkten mit höherer Verkaufsfrequenz dient, wobei die zusätzliche rechnergesteuerte Auslagerungsvorrichtung (10) nur einem Teilbereich des gesamten Regales zugeordnet ist,

3. Vorrichtung nach Anspruch 2, **dadurch gekennzeichnet, daß** das gesamte Regal aus einer Vielzahl von Regalmodulen (1, 8) zusammengesetzt ist, wobei zusätzliche Auslagerungsvorrichtungen (10) nur einzelnen Regalmodulen (8) zugeordnet sind.

4. Vorrichtung nach Anspruch 2, **dadurch gekennzeichnet, daß** das Regal im Bereich der zusätzlichen Auslagerungsvorrichtung (10) mit einer Vielzahl von geneigten Lagerschächten (9) für die Aufnahme von untereinander gleichartigen Produkten versehen ist.

## Claims

1. A method of computer-controlled storage and removal from storage of small-size packaged products, in particular pharmacy products, using a computer-controlled storage system, at least one shelf arrangement having a plurality of mutually superposed and juxtaposed shelf compartments and a computer-controlled handling device (5) which is displaceable in front of the shelf arrangement at a first side thereof for handling the products, in particular upon storage, removal from storage and transposition in storage, wherein the products, in particular upon being put into storage, are identified under computer control and are then deposited under computer control by means of the handling device in a shelf compartment and upon removal from storage on demand are removed from said shelf compartment again by means of the computer-controlled handling device (5),
**characterised in that** by means of an additional computer-controlled removal device (10) which serves exclusively for removal of the products from storage and which is associated only with a partial region of the entire shelf arrangement, products involving a higher selling frequency are removed from the shelf compartments within the partial region from the second side of the same shelf arrangement, which is in opposite relationship to the first side thereof, and simultaneously with the working operations of the handling device (5), wherein exclusively mutually similar products are respectively stored in said shelf compartments.

2. Apparatus for carrying out the method according to claim 1 comprising a computer-controlled storage system, a computer-controlled identification device (3) for identification of the products to be put into storage, at least one shelf arrangement having a plurality of mutually superposed and juxtaposed shelf compartments, and a computer-controlled handling device (5) which is displaceable in front of a first side of the shelf arrangement, for handling the products upon storage and removal from storage thereof, **characterised by** at least one additional computer-controlled storage removal device (10) which is arranged at a second side of the same shelf arrangement, in opposite relationship to the first side thereof, and which serves exclusively for removal from storage of products involving a higher selling frequency, wherein the additional computer-controlled storage removal device (10) is associated only with a partial region of the entire shelf arrangement.

3. Apparatus according to claim 2 **characterised in that** the entire shelf arrangement is composed of a plurality of shelf modules (1, 8), wherein additional storage removal devices (10) are associated only with individual shelf modules (8).

4. Apparatus according to claim 2 **characterised in that** in the region of the additional storage removal device (10) the shelf arrangement is provided with a plurality of inclined storage shafts (9) for receiving mutually similar products.

## Revendications

1. Procédé permettant le stockage et le déstockage, commandés par ordinateur, de produits en petites pièces emballés, en particulier de produits pharmaceutiques, en utilisant un système de stockage commandé par ordinateur, au moins une étagère avec une pluralité de cases d'étagère disposées les unes au-dessus des autres et les unes à côté des autres et un dispositif de manipulations (5) commandé par ordinateur, déplaçable devant l'étagère à un premier côté de l'étagère, pour la manipulation des produits, en particulier lors du stockage, du déstockage et du changement de place, où les produits, en particulier lors du stockage, sont identifiés d'une manière commandée par ordinateur et sont stockés ensuite au moyen du dispositif de manipulation (5), d'une manière commandée par ordinateur, dans une case d'étagère et, lors du déstockage, sont retirés à la demande au moyen du dispositif de manipulation commandé par ordinateur (5) de nouveau de cette case d'étagère,
**caractérisé en ce qu'**à l'aide d'un dispositif de déstockage supplémentaire (10) commandé par ordinateur, servant uniquement au déstockage, qui est associé seulement à une zone partielle de toute l'étagère, à partir d'un deuxième côté d'étagère, opposé au premier côté d'étagère, de la même étagère et synchronisé avec les étapes de travail du dispositif de manipulation (5), des produits d'une plus grande fréquence de vente sont retirés des cases d'étagère à l'intérieur de la zone partielle, où dans ces cases d'étagère sont stockés à chaque fois uniquement des produits similaires les uns aux autres.

2. Dispositif pour la mise en oeuvre du procédé selon la revendication 1, avec un système de stockage commandé par ordinateur, une installation d'identification (3) commandée par ordinateur pour l'identification des produits à stocker, au moins une étagère qui présente une pluralité de cases d'étagère disposées les unes au-dessus des autres et les unes à côté des autres, et un dispositif de manipulation (5) commandé par ordinateur, déplaçable devant un premier côté d'étagère pour la manipulation des produits lors du stockage et du déstockage, **caractérisé par** au moins un dispositif de déstockage additionnel (10) commandé par ordinateur, disposé à un deuxième côté d'étagère de la même étagère, opposé au premier côté d'étagère, qui sert uniquement au déstockage de produits d'une plus grande fréquence de vente, où le dispositif de déstockage additionnel (10) commandé par ordinateur est associé seulement à une zone partielle de toute l'étagère.

3. Dispositif selon la revendication 2, **caractérisé en ce que** toute l'étagère est constituée d'une pluralité de modules d'étagère (1,8), où des dispositifs de déstockage additionnels (10) sont associés seulement à des modules d'étagère individuels (8).

4. Dispositif selon la revendication 2, **caractérisé en ce que** l'étagère est pourvue dans la zone du dispositif de déstockage additionnel (10) d'une pluralité de puits de stockage appropriés (9) pour la réception de produits similaires les uns aux autres.
